# EUROPÄISCHE PATENTSCHRIFT

(11) **EP 3 610 276 B1**
(45) Veröffentlichungstag und Bekanntmachung des Hinweises auf die Patenterteilung: **06.01.2021**
(21) Anmeldenummer: 18746644.6
(22) Anmeldetag: 18.07.2018
(51) Int. Cl.: G01R 31/28, G01R 31/317, G06F 11/00

(54) **VERFAHREN UND SYSTEM ZUR PRÄDIKTIVEN WARTUNG VON INTEGRIERTEN SCHALTUNGEN**
METHOD AND SYSTEM FOR PREDICTIVE MAINTENANCE OF INTEGRATED CIRCUITS
PROCÉDÉ ET SYSTÈME D'ENTRETIEN PRÉVENTIF DES CIRCUITS INTÉGRÉS

(30) Priorität: 19.07.2017 EP 17182034
(43) Veröffentlichungstag der Anmeldung: 19.02.2020
(73) Patentinhaber: Siemens Aktiengesellschaft, 80333 München (DE)
(72) Erfinder: MATSCHNIG, Martin, 3430 Tulln (AT); EPPENSTEINER, Friedrich, 3620 Spitz (AT); FISCHER, Bernhard, 1120 Wien (AT); GHAMESHLU, Majid, 1110 Wien (AT); HINTERSTOISSER, Thomas, 2102 Bisamberg (AT); TAUCHER, Herbert, 1190 Wien (AT)
(74) Vertreter: Maier, Daniel Oliver
(86) Internationale Anmeldenummer: PCT/EP2018/069530
(87) Internationale Veröffentlichungsnummer: WO 2019/016278

(56) Entgegenhaltungen:
- US-A1- 2011 128 055
- US-A1- 2013 013 247
- US-A1- 2013 080 090
- US-A1- 2013 093 488

## Beschreibung

### Technisches Gebiet

Die vorliegende Erfindung betrifft allgemein das Gebiet der elektronischen Systeme und Schaltungen, insbesondere integrierte Schaltungen wie z.B. anwendungsspezifische, integrierte Schaltungen (ASICs) und Field Programmable Gate Arrays (FPGAs). Im Speziellen bezieht sich die vorliegende Erfindung auf ein Verfahren zur prädiktiven Wartung eines elektronischen Bauelements, welches als integrierte Schaltung, insbesondere als ASIC oder FPGA ausgeführt ist. Dieses elektronische Bauelement weist an zumindest einer Position Sensoren auf, von welchen während eines Betriebs des elektronischen Bauelements Systemparameter und eine Signallaufzeit an der zumindest einen Position ermittelt werden. Weiterhin betrifft die vorliegende Erfindung auch ein zugehöriges System zur prädiktiven Wartung eines elektronischen Bauelements.

### Stand der Technik

Bei vielen komplexen Systemen wie z.B. Steuerungs- und Regelsystemen für Maschinen und Anlagen, Computersystemen, Produktionsanlagen, Fahrzeugen und Flugzeugen, Triebwerken, etc. ist insbesondere bei sicherheitskritischen Anwendungen eine Zuverlässigkeit des Gesamtsystems ein wesentlicher Faktor. Die Systemzuverlässigkeit des Gesamtsystems kann insbesondere von der Lebensdauer einzelner Systemkomponenten oder Baugruppen bzw. den zugrunde liegenden elektronischen Bauelementen stark beeinflusst werden, wobei als Lebensdauer einer Systemkomponenten bzw. eines elektronischen Bauelements üblicherweise eine Zeit bezeichnet wird, in welcher diese ohne Austausch oder komplettem Versagen genutzt werden kann.

Um die Systemzuverlässigkeit bzw. eine funktionale Sicherheit eines Systems zu steigern, werden üblicherweise kritische Systemkomponenten bzw. Baugruppen redundant aufgebaut. D.h. eine funktional gleiche oder vergleichbare Komponente ist zusätzlich zur jeweiligen Systemkomponente vorhanden und kann bei Ausfall der jeweiligen Systemkomponente deren Aufgaben bzw. Funktion übernehmen. Das Gesamtsystem ist in diesem Fall zwar noch funktionsfähig, aber ein weiterer Fehler wie z.B. eine Störung oder ein Ausfall der redundanten Komponente würde einen sofortigen Systemausfall bzw. eine Betriebsstörung des Gesamtsystems bedeuten. Daher wird beispielsweise ein Gesamtsystem bei Ausfall einer Systemkomponente bzw. bei Verwendung der zugehörigen, redundanten Komponenten meist rasch in einen sicheren Zustand gebracht - üblicherweise bis zum Austausch der ausgefallenen Systemkomponente. Dies verursacht häufig eine reduzierte Einsatzfähigkeit des Gesamtsystems oder Stehzeiten, welche meist mit zusätzlichen Kosten verbunden sind.

Um Stehzeiten und damit verbundene, zusätzliche Kosten zu reduzieren, werden beispielsweise in der Fertigungsindustrie, bei Produktionsanlagen, bei der Fahrzeug- und/oder Flugzeugwartung, etc. Methoden der so genannten vorausschauenden oder prädiktiven Wartung eingesetzt. Dabei werden die Funktion und Funktionstüchtigkeit des jeweiligen Gesamtsystems oder einzelner Systemkomponenten (z.B. Maschinen, Motoren, Triebwerk eines Flugzeugs, etc.) anhand von Daten und Informationen, welche mittels Sensoren und/oder Aufzeichnungen von Ereignissen (so genannter Logs) während des Betriebs ermittelt werden, analysiert und daraus Vorhersagen über mögliche Fehlerzustände und/oder Ausfälle der jeweiligen Systemkomponente oder des Gesamtsystems abgeleitet. Gegebenenfalls können dann entsprechende Alarme ausgelöst und rechtzeitig - d.h. vor Ausfall der jeweiligen Systemkomponente bzw. des Gesamtsystems Gegenmaßnahmen gesetzt werden - wie z.B. eine rechtzeitige Wartung und/oder ein rechtzeitiger Austausch der betroffenen Komponente. Methoden der prädiktiven Wartung werden beispielsweise bereits seit geraumer Zeit im Bereich der Flug- und Raumfahrtstechnik z.B. zur Optimierung der Triebwerkswartung bzw. der dafür nötigen Logistik eingesetzt. Dabei werden z.B. aus einer Vielzahl an vorhandenen Sensordaten aus den Triebwerken Informationen abgeleitet, durch welche die Wartung unterstützt und optimiert werden kann.

Heutzutage werden bei vielen Anwendungen, insbesondere auch bei sicherheitskritischen Anwendungen, in Gesamtsystemen (z.B. in Geräten der Medizintechnik, der Unterhaltungselektronik, im Haushalt, etc. und/oder in Anlagen, in Fahrzeugen, in Flugzeugen, etc.) so genannte eingebettete Systeme eingesetzt. Ein eingebettetes System ist eine elektronische Systemkomponente (z.B. Rechner oder Computer), welche in einen technischen Kontext eingebunden ist und dabei z.B. Überwachungs-, Steuerungs- und/oder Regelungsfunktionen übernimmt oder z.B. für Signalverarbeitung zuständig ist. Oft werden eingebettete Systeme speziell an die jeweilige Aufgabe angepasst und müssen nicht selten Echtzeitanforderungen genügen.

In eingebetteten Systemen spielen elektronische Bauelemente, die als integrierte Schaltungen, insbesondere so genannte anwendungsspezifische, integrierte Schaltungen oder ASICs und/oder so genannte Field Programmable Gate Arrays oder FPGAs, ausgeführt sind, eine zentrale Rolle. Eine Fehlfunktion bzw. ein Ausfall einer integrierten Schaltung führt in vielen Fällen bzw. nahezu fast immer zu einer Fehlfunktion und in der Folge zu einem Ausfall des gesamten Systems und verursacht damit zumindest Stehzeiten. Um den Stehzeiten zu begegnen bzw. um derartigen Ausfällen und damit verbundenen Kosten vorzubeugen, werden insbesondere kritische Komponenten, welche häufig als integrierte Schaltungen wie z.B. ASICs oder FPGAs, ausgeführt sind, in eher pessimistischen - d.h. eher kurz gewählten - Wartungsintervallen ausgetauscht. Diese Wartungsintervalle werden sehr häufig von den als integrierte Schaltungen ausgeführten, elektronischen Bauelementen bestimmt, bei welchen es insbesondere aufgrund von Alterung zu Fehlfunktionen und/oder Fehlerzuständen bzw. Ausfällen kommen kann.

Integrierte Schaltungen sind üblicherweise elektronische Schaltungen, welche auf einem dünnen, meist einige Millimeter großen Plättchen (Chip oder Die) aus Halbleiter-Material (z.B. Silizium) aufgebracht werden und zum Schutz und zur einfacheren Kontaktierung in ein Chipgehäuse eingekapselt sind. Die integrierte Schaltung besteht typischerweise aus einer Kombination von zahlreichen elektrisch verbundenen, elektronischen Halbleiterbauelementen (z.B. Transistoren, Dioden und/oder weiteren aktiven und/oder passiven Bauelementen). Im Laufe der Zeit kommt es z.B. durch physikalische und chemische Effekte zu einer Verschlechterung des HalbleiterMaterials und damit zu negativen Effekten in Bezug auf die Funktionalität vor allem der Transistoren der integrierten Schaltung. Dadurch werden insbesondere Laufzeiten von Signalen in der integrierten Schaltung verlangsamt und in der Folge deren Funktionsweise negativ beeinflusst. D.h. mit steigendem Alter bzw. mit der Dauer des Einsatzes einer integrierten Schaltung wird eine Signalübertragung verzögert, die Geschwindigkeit der integrierten Schaltung sinkt und es können dadurch Fehlfunktionen und Fehlerzustände bis zu Ausfällen des Chips auftreten. Die integrierte Schaltung hat damit ihre Lebensdauer erreicht und muss ausgetauscht werden.

Zur Ermittlung von Wartungsintervallen bei Systemen mit integrierten Schaltungen kann daher die Lebensdauer des jeweiligen elektronischen Bauelements bzw. der jeweiligen integrierten Schaltung (ASIC, FPGA) herangezogen werden. Um diese zu ermitteln, muss z.B. auf Angaben des jeweiligen Herstellers der integrierten Schaltung zurückgegriffen werden. Dabei wird vom Hersteller unter bestimmten Rahmenbedingungen (z.B. Temperaturbereich für den Betrieb, max. Spannung, etc.) eine maximale Ausfallsrate garantiert. Aus einer Gesamtheit der Herstellerangaben für die jeweiligen einzelnen elektronischen Bauelemente bzw. integrierten Schaltungen des Gesamtsystems kann dann eine Lebensdauer und in der Folge ein Wartungsintervall für das Gesamtsystem abgeleitet werden.

Ein Nachteil dieser Vorgehensweise ist allerdings, dass die Herstellerdaten wie z.B. die maximale Ausfallsrate, etc. für eine integrierte Schaltung üblicherweise auf Durchschnitts- oder Mittelwerten von z.B. Zuverlässigkeitstests und/oder Stresstests bei z.B. erhöhter Temperatur und/oder Spannung, etc. basieren. Es können daher keine konkreten Annahmen in Bezug auf die jeweils verwendeten integrierten Schaltungen im Gesamtsystem während des Betriebs gemacht werden. Eine integrierte Schaltung kann z.B. aufgrund ihrer Verwendung bzw. Einsatzbereichs während des Betriebs eine langsamere oder raschere Alterung und damit eine größer oder geringere Zuverlässigkeit bzw. eine längere oder kürzere Lebensdauer als angegeben aufweisen. Dies kann einerseits insbesondere bei kritischen Komponenten z.B. zu relativ kurzen Wartungsintervallen und/oder einem gegebenenfalls nicht notwendigen bzw. verfrühten Austausch des elektronischen Bauelements und damit zu zusätzlichen Kosten führen. Andererseits können trotz kurz gewählter Wartungsintervalle Fehlerzustände und/oder Ausfälle von Komponenten/elektronischen Bauelementen auftreten und zu Stehzeiten und Kosten führen. Daher wäre es hilfreich auch bei Systemen, welche als integrierte Schaltungen ausgeführte, elektronische Bauelemente wie z.B. ASICs und/oder FPGAs aufweisen, eine vorausschauende oder prädiktive Wartung einzusetzen, um Fehlverhalten/-funktionen, Fehlerzustände und Ausfälle von elektronischen Bauelementen, insbesondere aufgrund der Alterung, frühzeitig zu erkennen.

Aus der Schrift S. Mitra und M. Agarwal; "Circuit failure prediction to overcome scaled CMOS reliability challenges"; 2007 IEEE International Test Conference, p. 1-3, 2007*.* ist beispielsweise einen Methode zur Vorhersage von Ausfällen integrierter Schaltungen, insbesondere auf Basis von CMOS-Technologie bekannt. Dabei werden an verschiedenen Positionen im Halbleiter-Material bzw. im Chip einer integrierten Schaltung eine große Anzahl verschiedener Sensoren angebracht. Von diesen Sensoren werden Informationen über verschiedene Systemparameter wie z.B. Temperatur, Spannung, Verzögerung von Ringoszillatoren, komplexe, zeitliche Zusammenhänge logischer Signale, etc. gesammelt. Die von den Sensoren gesammelten Informationen können dann on-chip oder off-chip ausgewertet werden, um Auffälligkeiten zu identifizieren und damit auftretende Fehlfunktionen vorherzusagen. Bei dieser Methode bedarf es allerdings aufgrund der Vielzahl an Informationen einer relativen und gegebenenfalls zeitaufwendigen und kostenintensive Auswertung.

Aus der Schrift US 2013/0013247 A1 ist ein Verfahren zum Ermitteln einer Performanz einer integrierten Schaltung mittels einer Halbleitereinheit in einer veränderlichen Testumgebung bekannt. Die Halbleitereinheit umfasst dabei zum Bestimmen der Performanz einer integrierten Halbleiterschaltung: eine Messeinheit zum Messen einer Frequenz der Testoperation, aus welcher eine Spannung und eine Temperatur berechnet werden; eine Bewertungseinheit zum Feststellen einer Durchführung von Testoperationen in einer zulässigen Testzeit und zum Festlegen einer maximale Testoperationsfrequenz festgelegt werden; und eine Steuereinheit mit einer Einheit zum Berechnen eines Verschlechterungsgrades, von welcher aus der maximalen Testoperationsfrequenz eine Zustandsverschlechterung abgeleitet wird. Die jeweilige Testoperationsfrequenz wird dabei von einer Überwachungsschaltung mittels eines Ringoszillators auf der zu testenden Schaltung gemessen.

Die Schrift US 2013/080090 A1 beschreibt ein Verfahren zur alterungsbasierten Nutzungsmessung von Komponenten eines integrierten Schaltkreise. Dabei weist der integrierte Schaltkreis neben verschiedenen Komponenten, welche zugehörige Nutzungsvektoren enthalten, eine alterungsbasierte Nutzungsschaltung auf, mit welcher eine Nutzung der Komponenten gemessen werden kann. Die Komponenten können so konfiguriert sein, dass sie bei einer Verwendung jeweils ihre zugehörigen Nutzungsvektoren an die Nutzungsmessschaltung übertragen, welche durch die Nutzungsmessschaltung verarbeitet werden. Die Komponenten der Nutzungsmessschaltung können in Folge der Verarbeitung im Laufe der Zeit altern, wodurch die Verwendung der Komponenten des integrierten Schaltkreises bestimmt wer- den kann. Dies stellt aber ein eher aufwendige und ungenaue Bestimmung der Alterung der Schaltkreiskomponenten dar.

Weiterhin offenbart die Schrift US 2013/093488 ein System und ein Verfahren zum effizienten Durchführen einer zeitlichen Analyse von Bereichen einer integrierten Schaltung. Dazu sind Kontrolleinheiten in verschiedenen physikalischen Bereichen der Schaltung bzw. des zugehörigen Chips angebracht, wobei jede Kontrolleinheit ein Zeitcharakteristik und Selbsttest-Schaltung enthält. Für Zeitmessungen werden eine oder mehrere abstimmbare Verzögerungsleitungen verwendet, welche vor Zeitmessungen auf Fehlerfreiheit geprüft werden und bei erkannten Fehlern mit Skalierungsfaktoren versehen werden. Durch die Zeitmessungen kann dann festgestellt werden, dass ein bestimmter, physikalischer Bereich der integrierten Schaltung schneller oder langsamere Zeitwerte liefert. Anhand einer resultierenden Statistik kann dann ein Betriebsmodus der integrierten Schaltung in zumindest dem bestimmten Bereich geändert werden. Eine Alterung einzelner Bauelemente der Schaltung kann mit diesem Verfahren allerdings nur bedingt erkannt und ermittelt werden.

### Darstellung der Erfindung

Der Erfindung liegt daher die Aufgabe zugrunde, ein Verfahren zur prädiktiven Wartung von elektronischen Bauelementen bzw. von integrierten Schaltungen sowie ein zugehöriges System zur Durchführung des Verfahrens anzugeben, durch welche auf einfache und rasche Weise und mit geringem Aufwand Fehlfunktionen und/oder Fehlerzustände elektronischer Bauelemente bzw. integrierter Schaltungen, insbesondere aufgrund von Alterung, frühzeitig erkannt werden können.

Diese Aufgabe wird durch ein Verfahren der eingangs genannten Art sowie durch ein zugehöriges System zur Durchführung des erfindungsgemäßen Verfahrens mit den Merkmalen gemäß den unabhängigen Patentansprüchen gelöst. Vorteilhafte Ausführungs formen der vorliegenden Erfindung sind in den abhängigen Ansprüchen beschrieben.

Erfindungsgemäß erfolgt die Lösung der Aufgabe durch ein Verfahren der eingangs erwähnten Art, bei welchem im elektronischen Bauelement eine zentrale Überwachungseinheit angebracht wird. Von dieser zentralen Überwachungseinheit werden die aktuell von den Sensoren im elektronischen Bauelement an der zumindest einen Position ermittelten Werte der Systemparameter sowie die aktuell ermittelte Signallaufzeit an der zumindest einen Position abgefragt. Dabei werden als Systemparameter Temperatur und Spannung an der zumindest einen Position des elektronischen Bauelements ermittelt. Anhand der aktuell ermittelten Werte der Systemparameter wird von der zentralen Überwachungseinheit ein jeweils gültiger Grenzwert für die Signallaufzeit an der zumindest einen Position ermittelt. Der jeweils gültige Grenzwert für die Signallaufzeit wird mit dem aktuell ermittelten Wert der Signallaufzeit an der zumindest einen Position verglichen. Bei Überschreiten des jeweils gültigen Grenzwerts für die Signallaufzeit durch den aktuell ermittelten Wert der Signallaufzeit an der zumindest einen Position wird von der zentralen Überwachungseinheit ein Meldung an eine übergeordnete Ebene gesendet.

Der Hauptaspekt des erfindungsgemäßen Verfahrens besteht darin, dass rasch, einfach und mit relativ geringem Aufwand frühzeitig erkannt werden kann, dass in naher Zukunft in einem elektronischen Bauelement eine Fehlfunktion und/oder ein Fehlerzustand auftreten wird. Durch das erfindungsgemäße Verfahren können nicht nur Kosten gespart, sondern auch Wartungsintervalle besser und/oder dynamisch und bedarfsorientiert gestaltet und Stehzeiten reduziert bzw. teilweise vermieden werden. Insbesondere kann anhand des jeweils ermittelten, gültigen Grenzwerts für die Signallaufzeit von der zentralen Überwachungseinheit sehr einfach und rasch eine signifikante Verlangsamung der Signallaufzeit festgestellt werden. In naher Zukunft auftretende Fehlfunktionen und Fehlerzustände in elektronischen Bauelementen bzw. integrierten Schaltungen, welche aufgrund von Alterung auftreten würden, werden damit frühzeitig erkannt und können an eine übergeordnete Ebene gemeldet werden. Eine derartige übergeordnete Ebene kann beispielsweise ein Gesamtsystem, in welches das elektronische Bauelement eingebaut ist, oder eine zentrale Kontrolleinheit (z.B. für mehrere Gesamtsysteme) sein. Durch die entsprechende Meldung an die übergeordnete Ebene kann beispielsweise rechtzeitig eine Wartung eines Gesamtsystems bzw. einen Austausch der betroffenen Systemkomponente, in welchem das elektronische Bauelement bzw. die integrierte Schaltung im Einsatz ist, oder des elektronischen Bauelements selbst veranlasst werden, ohne dass es z.B. zu zusätzlichen Stehzeiten kommt.

Mit Hilfe der zentralen Überwachungseinheit, von welcher Systemparameter- und Signallaufzeitwerte von Sensoren an unterschiedlichen Positionen des elektronischen Bauelements abgefragt werden, können Daten und Informationen aus verschiedenen Teile des elektronischen Bauelements bzw. der integrierten Schaltung ausgewertet werden. Durch diese gemeinsame Auswertung von Information und Daten, welche an verschiedenen Positionen des elektronischen Bauelements ermittelt wurden, können gegebenenfalls Effekte sichtbar gemacht werden, welche bei einer punktuellen bzw. nur positionsspezifischen Auswertung unentdeckt bleiben würden.

Als Systemparameter werden idealerweise Temperatur und Spannung an der zumindest einen Position des elektronischen Bauelements ermittelt, wobei die aktuell ermittelten Werte von Temperatur und Spannung der jeweiligen Position von der zentralen Überwachungseinheit als Eingangswerte für die Ermittlung des jeweils gültigen Grenzwerts für die Signallaufzeit der jeweiligen Position verwendet werden. Es kann damit mit einem relativen geringen Aufwand bei der Datenabfrage und - auswertung auf die Alterung der elektronischen Bauelements geschlossen werden. Als Parameter werden dann nur jeweils aktuelle Werte von Temperatur und Spannung an einer Position des elektronischen Bauelements sowie die Signallaufzeit an dieser Position verwendet.
Es ist vorteilhaft, wenn die im elektronischen Bauelement an zumindest einer Position angebrachten Sensoren in zumindest einem Überwachungselement positionsspezifisch zusammengefasst werden. Durch das Überwachungselement werden die Sensoren an einer Position des elektronischen Bauelements bzw. die von den Sensoren an dieser Position gelieferten Werte der Systemparameter und der Signallaufzeit gebündelt und damit deren Weiterleitung an die zentrale Überwachungseinheit vereinfacht. Vor allem bei größeren und komplexen, integrierten Schaltungen, welche an einer Vielzahl von Positionen Sensoren zum Ermitteln von Systemparametern und der Laufzeit aufweisen können, kann durch ein Zusammenfassen der Sensoren an den jeweiligen Positionen des elektronischen Bauelements zu Überwachungselementen die Abfrage der aktuellen Werte der Systempa- rameter und der Signallaufzeit für die jeweiligen Position für die zentrale Überwachungseinheit erheblich vereinfacht werden. Weiterhin kann wesentlich einfacher die jeweilige Position, von welcher diese Werte stammen, von der zentralen Überwachungseinheit erkannt bzw. bestimmt werden.

Es ist weiterhin günstig, wenn eine Ermittlung des jeweils gültigen Grenzwerts für die Signallaufzeit an der zumindest einen Position auf Basis der aktuell ermittelten Werte der Systemparameter an dieser zumindest einen Position derart durchgeführt wird, dass vom jeweils ermittelten, gültigen Grenzwert ein kritischer Wert für die Signallaufzeit an der zumindest einen Position nicht überschritten wird. Der jeweils ermittelte, gültige Grenzwert liegt idealerweise eine vorgegebene Toleranz oder ein vorgebbares Schutzintervall unterhalb des kritischen Werts für die Signallaufzeit. Dabei ist der kritische Wert für die Signallaufzeit vom jeweiligen Einsatz bzw. von der jeweiligen Verwendung des elektronischen Bauelements abhängig. Durch den kritischen Wert wird für die jeweilige Anwendung eine Signallaufzeit angegeben, ab welcher es aufgrund von altersbedingten Signalverzögerungen zu Fehlfunktionen, Fehlerzuständen und/oder Ausfällen kommen wird und bei welcher das elektronische Bauelement ausgetauscht werden muss. Da der jeweils ermittelte, gültige Grenzwert für die Signallaufzeit noch unterhalb des kritischen Werts liegt, kann beispielsweise das elektronische Bauelement bzw. die integrierte Schaltung rechtzeitig - d.h. noch bevor altersbedingten Fehlfunktionen und/oder Fehlerzuständen beim elektronischen, integrierten Bauelement auftreten - ausgetauscht werden.

Bei einer vorteilhaften Ausgestaltung des erfindungsgemäßen Verfahrens werden während des Betriebs des elektronischen Bauelements bzw. des übergeordneten Gesamtsystems die aktuell von den Sensoren an der zumindest einen Position ermittelten Werte der Systemparameter und der Signallaufzeit laufend von der zentralen Überwachungseinheit abgefragt. Damit können beispielsweise Verlangsamungen von Signallaufzeiten sofort erkannt und in kürzester Zeit entsprechend reagiert werden. Eine laufende Datenabfrage und -auswertung durch die zentrale Überwachungseinheit ist insbesondere bei sicherheitsrelevanten Anwendungen und/oder Einsatzbereichen des elektronischen Bauelements mit hohen Belastungen durch z.B. Temperatur und/oder Spannung, welche gegebenenfalls zu einer rascheren Alterung des Chips führen können, sinnvoll.

Alternativ können in vorteilhafter Weise die von den Sensoren an der zumindest einen Position ermittelten Werte der Systemparameter und der Signallaufzeit von der zentralen Überwachungseinheit während vorgegebener, periodischer Selbsttestphasen während des Betriebs abgefragt und ausgewertet werden. Damit kann beispielsweise bei elektronischen Bauelementen mit einer relativ hohen Lebensdauer oder bei einem Einsatz von elektronischen Bauelementen, welchen der Chip geringeren Belastungen z.B. durch Temperatur und/oder Spannung ausgesetzt ist, der Aufwand der Datenauswertung in der zentralen Überwachungseinheit reduziert werden.

Es ist weiterhin günstig, wenn für die Ermittlung der Systemparameter, insbesondere für die Ermittlung von Temperatur und Spannung, sowie der Signallaufzeit an der zumindest einen Position bereits vorhandene Sensoren genutzten, welche für eine Verlustleistungsminimierung des elektronischen Bauelements eingesetzt werden. Bei integrierten Schaltungen, insbesondere bei anwendungsspezifischen, integrierten Schaltungen bzw. ASICs, werden heutzutage bereits häufig Spannung, Temperatur und Prozess mit Hilfe von so genannten Vernier Delay Lines erfasst und daraus eine Signalverzögerung abgeleitet. Mit Hilfe dieser Informationen wird eine Regelung der Versorgungsspannung bzw. eines so genanntes Dynamic Voltage Scaling (DVS) - d.h. einen dynamische Spannungsanpassung zur Verlustleistungsminimierung durchgeführt. Dabei wird eine Versorgungsspannung für die integrierte Schaltung derart geregelt, dass eine Signalverzögerung einen definierten Wert, bei welchen alle Verzögerungen im Chip noch eingehalten werden, nicht überschreitet. Zur Informationsgewinnen für die dynamische Spannungsanpassung bzw. das DVS sind zur Messung von Temperatur, Spannung und Signallaufzeit üblicherweise an mehreren Positionen im Halbleiter-Material des elektronischen Bauelement bzw. der integrierten Schaltung entsprechende Sensoren angebracht. Diese bereits vorhandenen Sensoren können idealerweise zumindest teilweise für die Ermittlung der aktuellen Werte der Systemparameter, insbesondere Temperatur und Spannung, sowie der Signallaufzeit genutzt werden.

Die Lösung der Aufgabe erfolgt weiterhin durch ein System zur Durchführung des erfindungsgemäßen Verfahrens zur prädiktiven Wartung von elektronischen Bauelementen bzw. integrierten Schaltungen, insbesondere von ASICs oder FPGAs. Das erfindungsgemäße System umfasst dabei zumindest Sensoren zum Ermitteln aktueller Werte von Systemparametern und einer Signallaufzeit an zumindest einer Position des elektronischen Bauelements. Dabei sind die Sensoren im elektronischen Bauelemente - z.B. im Halbleiter-Material des elektronischen Bauelements - angebracht. Weiterhin umfasst das System eine zentrale Überwachungseinheit, welche ebenfalls im elektronischen Bauelement angebracht ist. Diese zentrale Überwachungseinheit ist dazu eingerichtet, die aktuell an der zumindest einen Position des elektronischen Bauelements ermittelten Werte der Systemparameter und der Signallaufzeit abzufragen, anhand der aktuell ermittelten Werte der Systemparameter einen jeweils gültigen Grenzwert für die Signallaufzeit an der zumindest einen Position zu ermitteln und den jeweils gültigen Grenzwert mit dem aktuell ermittelten Wert der Signallaufzeit an der zumindest einen Position zu vergleichen. Als Systemparameter werden dabei Temperatur und Spannung an der zumindest einen Position des elektronischen Bauelements ermittelt.

Idealerweise ist die zentrale Überwachungseinheit auch dazu eingerichtet, bei Überschreiten des jeweils gültigen Grenzwerts durch den aktuell ermittelte Wert der Signallaufzeit an der zumindest einen Position Meldungen an eine übergeordnete Ebene zu senden.

Durch das erfindungsgemäße System werden mit relativ geringem Aufwand und frühzeitig in naher Zukunft auftretende Fehlfunktionen und/oder Fehlzustände in einem elektronischen Bauelement bzw. in einer integrierten Schaltung erkannt. Insbesondere ist von der zentralen Überwachungseinheit durch den jeweils ermittelten, gültigen Grenzwerts für die Signallaufzeit sehr einfach und rasch eine signifikante Verlangsamung der Signallaufzeit feststellbar. In naher Zukunft zu erwartende Fehlzustände oder Ausfälle von elektronischen Bauelementen aufgrund von Alterung werden damit frühzeitig erkannt und können von der zentralen Überwachungseinheit an eine übergeordnete Ebene wie z.B. das Gesamtsystem, in welche das elektronische Bauelement eingesetzt ist, oder eine zentrale Kontrolleinheit (z.B. für mehrere Gesamtsysteme) gemeldet werden. Damit können nicht nur Kosten gespart, sondern aus Bauelemente und/oder Systemkomponenten rechtzeitig ausgetauscht, Stehzeiten reduziert bzw. teilweise vermieden und Wartungsintervalle dynamisch und bedarfsorientiert gestaltet werden.

Durch den Einsatz einer zentralen Überwachungseinheit beim erfindungsgemäßen System, von welcher Systemparameter- und Signallaufzeitwerte von Sensoren an unterschiedlichen Positionen des elektronischen Bauelements abgefragt werden, können Daten und Informationen aus verschiedenen Teilen des elektronischen Bauelements gemeinsam ausgewertet werden. Dadurch können gegebenenfalls Effekte sichtbar gemacht werden, welche bei einer punktuellen bzw. nur positionsspezifischen Auswertung unentdeckt bleiben würden.

Bei einer bevorzugten Fortbildung des erfindungsgemäßen Systems ist zumindest ein Überwachungselement vorgesehen, in welchem die im elektronischen Bauelement an der zumindest einen Position angebrachten Sensoren zusammengefasst sind. Durch das zumindest eine Überwachungselement werden die Sensoren an der zumindest eine Position des elektronischen Bauelements zusammengefasst und die von den Sensoren ermittelten Werte der Systemparameter und der Signallaufzeit gebündelt. Insbesondere bei Sensoren an mehreren Positionen des elektronischen Bauelements kann ein positionsspezifisches Zusammenfassen der Sensoren an den jeweiligen Positionen zu Überwachungselementen zu einer wesentlichen Vereinfachung der Datenabfrage durch die zentrale Überwachungseinheit führen. Weiterhin kann die jeweilige Position, von welcher die Daten bzw. die aktuellen Werte der Systemparameter und der Signallaufzeit stammen, von der zentralen Überwachungseinheit wesentlich einfacher bestimmt werden.

Idealerweise sind als Sensoren zum Ermitteln aktueller Werte von Systemparametern an der zumindest einen Position des elektronischen Bauelements zumindest ein Sensor zum Bestimmen aktueller Temperaturwerte und ein Sensor zum Bestimmen aktueller Spannungswerte eingesetzt. Dabei kann beispielsweise - sofern im elektronischen Bauelement bzw. der integrierten Schaltung vorhanden - zumindest teilweise eine Infrastruktur des so genanntes Dynamic Voltage Scaling (DVS) bzw. der dynamische Spannungsanpassung zur Verlustleistungsminimierung genutzt werden. Dadurch werden vor allem eine Entwicklung und Realisierung eines elektronischen Bauelements, welche das erfindungsgemäße System zur prädiktiven Wartung umfasst, erheblich vereinfacht.

Eine spezielle Ausführungsvariante des erfindungsgemäßen Systems sieht vor, dass die zentrale Überwachungseinheit als eigenständige Einheit ausgeführt ist. D.h. die zentrale Überwachungseinheit ist als eigenständiges Modul im elektronischen Bauelement bzw. in der integrierten Schaltung realisiert. Sie kann damit weitgehend unabhängig von den anderen Einheiten (z.B. CPU, Kontroller, etc.) des elektronischen Bauelements die Abfrage und Auswertung der Systemparameter- und Signallaufzeitwerten vornehmen.

Alternativ kann die zentrale Überwachungseinheit in eine Systemeinheit wie z.B. eine CPU oder Prozessoreinheit, etc. integriert sein. Die Abfrage und Auswertung der Systemparameter und der Signallaufzeit von den Sensoren bzw. den Überwachungselementen wird dann durch die Systemeinheit abgearbeitet. Die zentrale Überwachungseinheit bildet damit eine funktionale Einheit der Systemeinheit.

### Kurzbeschreibung der Zeichnung

Die Erfindung wird nachfolgend in beispielhafter Weise anhand der beigefügten Figuren erläutert. Dabei zeigen:
- Figur 1: schematisch einen beispielhaften Ablauf des erfindungsgemäßen Verfahren zur prädiktiven Wartung eines elektronischen Bauelements mit dem zugehörigen erfindungsgemäßem System
- Figur 2: schematisch ein beispielshafte Ausführungsvariante des erfindungsgemäßen Systems zur prädiktiven Wartung eines elektronischen Bauelements

### Ausführung der Erfindung

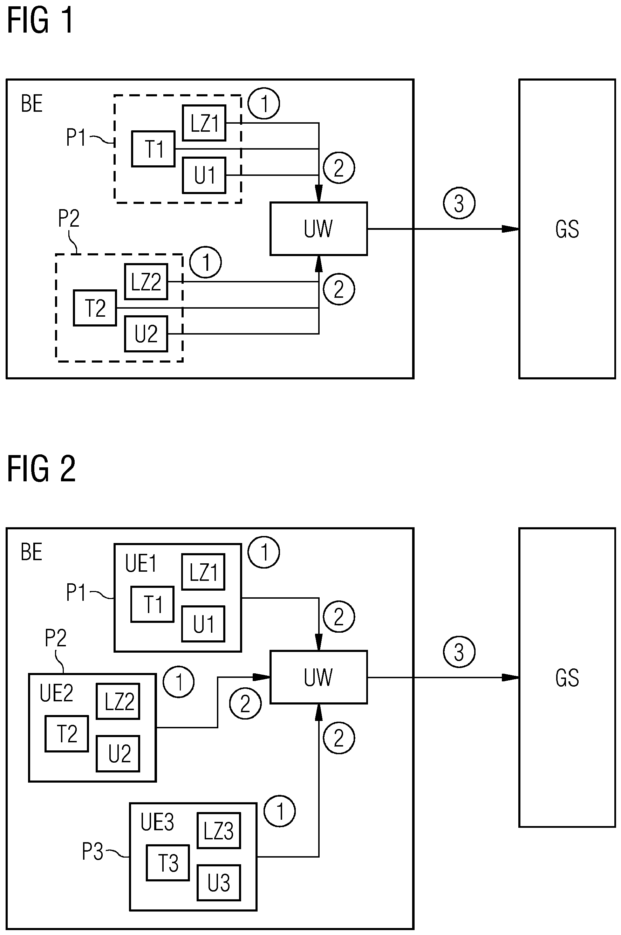

Figur 1 zeigt in schematischer Weise ein beispielhaftes elektronisches Bauelement BE. Das Bauelement BE ist als integrierte Schaltung - beispielsweise als anwendungsspezifische, integrierte Schaltung oder ASIC - ausgeführt. Alternativ kann das elektronische Bauelement BE aber auch als so genanntes Field Programmable Gate Array oder FPGA ausgeführt sein. Das elektronische Bauelement BE kann beispielsweise eine Systemkomponente oder Teil einer Systemkomponente in einem Gesamtsystem GS sein, welches als übergeordnete Ebene fungiert und beispielsweise als eingebettetes System GS ausgestaltet ist.

Das in Figur 1 beispielhaft dargestellte, elektronische Bauelement BE weist - neben anderen der Einfachheit halber in Figur 1 nicht dargestellten Einheiten - an zwei beispielhaften Position P1, P2 mehrere Sensoren T1, U1, LZ1, T2, U2, LZ2 auf, welche z.B. im Halbleiter-Material des elektronischen Bauelements BE bzw. der integrierten Schaltung angebracht sind. Von den Sensoren T1, U1, LZ1, T2, U2, LZ2 werden aktuelle Werte von Systemparametern wie z.B. Temperatur und Spannung sowie einer Signallaufzeit an der jeweiligen Position P1, P2 ermittelt. D.h. von ersten Sensoren T1, U1, LZ1 werden beispielsweise an einer ersten Position P1 des elektronischen Bauelements BE von einem Sensor T1 aktuelle Temperaturwerte, von einem Sensor U1 aktuelle Spannungswerte und von Sensor LZ1 aktuelle Werte für die Signallaufzeit bestimmt. An einer zweiten Position P2 des elektronischen Bauelements BE werden z.B. von zweiten Sensoren T2, U2, LZ2 ebenfalls aktuelle Werte von Temperatur, Spannung und die Signallaufzeit für die zweite Position P2 ermittelt. Dazu können die zweiten Sensoren T2, U2, LZ2 ebenfalls einen Sensor T2 zum Bestimmen aktueller Temperaturwerte, einen Sensor U2 zum Bestimmen aktueller Spannungswerte sowie einen Sensor LZ2 aufweisen, mit welchem aktuelle Werte der Signallaufzeit an der zweiten Position P2 ermittelbar sind. Die Sensoren T1, U1, LZ1, T2, U2, LZ2 können z.B. zumindest Teil einer bereits vorhandenen Infrastruktur für eine dynamische Spannungsanpassung zur Verlustleistungsminimierung bzw. ein so genanntes Dynamic Voltage Scaling (DVS) sein.

Weiterhin weist das elektronische Bauelement BE einen zentrale Überwachungseinheit UW auf, von welcher gemeinsam mit den im elektronischen Bauelement BE angebrachten Sensoren T1, U1, LZ1, T2, U2, LZ2 das erfindungsgemäße System für eine prädiktive Wartung des elektronischen Bauelements BE gebildet wird. Die zentrale Überwachungseinheit UW kann dabei als eigenständige Einheit bzw. als eigenständiges Modul im elektronischen Bauelement BE realisiert sein. Alternativ kann die zentrale Überwachungseinheit UW in eine - in Figur 1 nicht dargestellte - Systemeinheit des elektronischen Bauelements BE wie z.B. ein CPU, einen Prozessor, etc. integriert sein und von dieser im Gesamtsystem GS als funktionale Einheit ausgeführt werden.

Die zentrale Überwachungseinheit UW ist dazu eingerichtet, das erfindungsgemäße Verfahren zur prädiktiven Wartung auszuführen. Dabei werden in einem ersten Verfahrensschritt 1 von den Sensoren T1, U1, LZ1, T2, U2, LZ2 während des Betriebs des elektronischen Bauelements BE bzw. des Gesamtsystems GS an der jeweiligen Position P1, P2 die aktuellen Werte der Systemparameter, insbesondere von Temperatur und Spannung, sowie aktuelle Werte einer Signallaufzeit ermittelt. Die aktuellen Werte der Systemparameter sowie der Signallaufzeit der jeweiligen Position P1, P2 werden von der zentralen Überwachungseinheit UW abgefragt.

Eine Abfrage der aktuellen Werte der Systemparameter und der Signallaufzeit der verschiedenen Positionen P1, P2 durch die zentrale Überwachungseinheit UW kann beispielsweise laufend während des Betriebs des elektronischen Bauelements BE durchgeführt werden. Alternativ können die von den Sensoren T1, U1, LZ1, T2, U2, LZ2 an den jeweiligen Positionen P1, P2 aktuelle ermittelten Werte der Systemparameter und der Signallaufzeit auch während vorgegebener Selbsttestphasen abgefragt werden, wobei die Selbsttestphasen periodisch wiederholt bzw. durchlaufen werden.

In einem zweiten Verfahrensschritt 2 wird von der zentralen Überwachungseinheit UW anhand der an der jeweiligen Position P1, P2 ermittelten, aktuellen Werte der Systemparameter, insbesondere anhand der aktuellen Temperatur- und Spannungswerte, ein jeweils gültiger Grenzwert für die Signallaufzeit an der jeweiligen Position P1, P2 ermittelt. Die Ermittlung des jeweils ermittelten, gültigen Grenzwerts für die jeweilige Signallaufzeit an der jeweiligen Position P1, P2 wird dabei derart durchgeführt, dass vom jeweils ermittelten, gültigen Grenzwert ein jeweiliger, kritischer Wert für die Signallaufzeit an der jeweiligen Position P1, P2 nicht überschritten wird. D.h. der jeweils gültige Grenzwert liegt ein z.B. vorgebbares Toleranz- oder Schutzintervall unterhalb des jeweiligen kritischen Werts für die Signallaufzeit an der jeweiligen Position P1, P2, wobei bei Erreichen des kritischen Werts für die Signallaufzeit an einer Position P1, P2 des elektronischen Bauelements BE das elektronisches Bauelement BE z.B. aufgrund von auftretenden Fehlerzuständen ausgetauscht werden sollte bzw. muss.

Bei dem in Figur 1 beispielhaft dargestellten, elektronischen Bauelement BE wird von der zentralen Überwachungseinheit UW im zweiten Verfahrensschritt 2 beispielsweise auf Basis der von den ersten Sensoren T1, U1 ermittelten, aktuellen Werten von Temperatur und Spannung ein erster jeweils gültiger Grenzwert für die Signallaufzeit an der erste Position P1 ermittelt. Weiterhin wird von der zentralen Überwachungseinheit UW für die zweite Position P2 auf Basis der von den zweiten Sensoren T2, U2 ein zweiter jeweils gültiger Grenzwert für die Signallaufzeit an der zweiten Position P2 bestimmt.

Dann wird der jeweils gültige Grenzwert für die Signallaufzeit an der jeweiligen Position P1, P2 von der zentralen Überwachungseinheit UW mit dem aktuell ermittelten Wert der Signallaufzeit an der jeweiligen Position P1, P2 verglichen. Im Zuge der Alterung des elektronischen Bauelements BE kann sich die Signallaufzeit an verschiedenen Positionen P1, P2 im elektronischen Bauelement selbst bei gleichbleibenden Rahmenbedingungen (z.B. Temperatur, Spannung, Belastung, etc.) verlangsamen. Durch zentrale Überwachungseinheit UW kann dabei eine signifikante Verlangsamung der Signallaufzeit an der jeweiligen Position P1, P2 des elektronischen Bauelements BE detektieren. Das bedeutet, bei dem in Figur 1 beispielhaft dargestellten, elektronischen Bauelement BE wird von der zentralen Überwachungseinheit z.B. der erste jeweils gültige Grenzwert mit aktuell, ermittelten Werten der Signallaufzeit verglichen, welche vom Sensor LZ1 an der ersten Position P1 ermittelt wurden. Der zweite jeweils gültige Grenzwert wird dann z.B. mit aktuell, ermittelten Werten der Signallaufzeit verglichen, welche vom Sensor LZ2 an der zweiten Position P2 bestimmt wurden.

Wird beim Vergleich des jeweiligen aktuellen Werts der Signallaufzeit an der jeweiligen Position P1, P2 mit dem entsprechenden, jeweils gültigen Grenzwert festgestellt, dass von einem aktuell, ermittelten Signallaufzeitwert an zumindest einer Position P1, P2 der entsprechende, jeweils gültige Grenzwerte überschritten wird, dann wird in einem dritten Verfahrensschritt 3 von der zentralen Überwachungseinheit UW eine Meldung an die übergeordnete Ebenen - z.B. an das Gesamtsystem GS - gesendet. Alternativ kann z.B. die Meldung von der zentralen Überwachungseinheit UW an eine zentrale Kontrolleinheit gesendet werden, von welcher beispielsweise das Gesamtsystem GS oder mehrere Systeme überwacht werden. Aufgrund der Meldung kann auf der übergeordneten Systemebene GS in geeigneter Weise reagiert werden - z.B. durch Alarmmeldungen, durch Auslösen von entsprechenden Maßnahmen, etc. Es kann beispielsweise bedarfsorientiert ein Austausch des elektronischen Bauelements BE oder der entsprechenden Systemkomponente vorgenommen oder eine Wartung des Gesamtsystems GS veranlasst werden.

Figur 2 zeigt wieder in schematischer Weise das beispielhafte, elektronische Bauelement BE, welches das System zur prädiktiven Wartung aufweist. Dazu sind im elektronischen Bauelement BE bzw. im Halbleiter-Material des elektronischen Bauelements BE beispielsweise an mehreren - z.B. an drei Positionen P1, P2, P3 Sensoren T1, U1, LZ1, T2, U2, LZ2, T3, U3, LZ3 angebracht, von welchen aktuelle Werte der Systemparameter (z.B. Temperatur, Spannung) sowie der Signallaufzeit an der jeweiligen Position P1, P2, P3 ermittelt werden. Zur Vereinfachung des Systems bzw. der Abfrage der aktuell, von den jeweiligen Sensoren T1, U1, LZ1, T2, U2, LZ2, T3, U3, LZ3 ermittelten Werte durch die zentrale Überwachungseinheit UW sind die Sensoren T1, U1, LZ1, T2, U2, LZ2, T3, U3, LZ3 positionsspezifisch in Überwachungselementen UE1, UE2, UE3 zusammengefasst. Ein erstes Überwachungselement UE1 umfasst dabei z.B. erste Sensoren T1, U1, LZ1 zum Ermitteln der aktuellen Werte der Systemparameter bzw. von Temperatur und Spannung sowie der Signallaufzeit an der ersten Position P1. Zweite Sensoren T2, U2, LZ2 der zweiten Position P2 werden z.B. in einem zweiten Überwachungselement UE2 zusammengefasst und ein drittes Überwachungselement UE3 umfasst beispielsweise dritte Sensoren T3, U3, LZ3 an einer dritten Position P3.

Die aktuellen Werte der Systemparameter und der Signallaufzeit an der jeweiligen Position P1, P2, P3 werden wieder während des Betriebs im ersten Verfahrensschritt 1 von den jeweiligen Sensoren T1, U1, LZ1, T2, U2, LZ2, T3, U3, LZ3 ermittelt. Dann werden die aktuell ermittelten Werte der Systemparameter und der Signallaufzeit an der jeweiligen Position P1, P2, P3 vom jeweiligen Überwachungselement UE1, UE2, UE3 gebündelt und können von der zentralen Überwachungseinheit UW positionsspezifisch vom jeweiligen Überwachungselement UE1, UE2, UE3 entweder laufend oder während vorgebbarer, periodischer Selbsttestphasen des elektronischen Bauelements BE abgefragt werden.

Im zweiten Verfahrensschritt 2 wird von der zentralen Überwachungseinheit UW anhand der aktuell ermittelten Werte der Systemparameter für die jeweilige Position P1, P2, P3 ein jeweils gültiger Grenzwert für die Signallaufzeit an der jeweiligen Position P1, P2, P3 ermittelt. Der jeweils gültige Grenzwert für die Signallaufzeit an der jeweiligen Position P1, P2, P3 wird dann mit aktuell, für die jeweilige Position P1, P2, P3 ermittelten Werten der Signallaufzeit verglichen. Wird zumindest einer der jeweils gültigen Grenzwerte für die Signallaufzeit an der jeweiligen Position P1, P2, P3 vom entsprechenden aktuell ermittelten Wert der Signallaufzeit für die jeweilige Position P1, P2, P3 überschritten, so wird im dritten Verfahrensschritt 3 ein Meldung an die übergeordnete Ebene - z.B. das Gesamtsystem GS - gesendet. Es können dann wieder entsprechende Maßnahmen und Reaktionen veranlasst werden.

In einer alternativen Ausführungsform des erfindungsgemäßen Systems kann z.B. der zweite Verfahrensschritt 2 des erfindungsgemäßen Verfahrens zumindest teilweise in die Überwachungselemente UE1, UE2, UE3 verlagert werden. Das bedeutet, dass bereits lokal im jeweiligen Überwachungselement UE1, UE2, UE3 die von den jeweiligen Sensoren T1, U1, LZ1, T2, U2, LZ2, T3, U3, LZ3 ermittelten Werte der Systemparameter und der Signallaufzeit ausgewertet werden. Im ersten Überwachungselement UE1 wird z.B. anhand der aktuell ermittelten Wert der Systemparameter, insbesondere Temperatur und Spannung, der jeweils gültige Grenzwert für die Signallaufzeit an der erste Position P1 ermittelt und dann der Vergleich des jeweils gültigem Grenzwerts mit dem aktuell ermittelten Wert der Signallaufzeit an der ersten Position P1 durchgeführt. Analog wird dieser Teil des zweiten Verfahrensschritts 2 auch von den weiteren Überwachungselement UE2, UE3 für die jeweiligen, weiteren Positionen P2, P3 durchgeführt.

Die Überwachungselemente UE1, UE2, UE3 können dann von der zentralen Überwachungseinheit UW beispielsweise abgefragt werden und das jeweilige Vergleichsergebnis (z.B. "Grenzwert überschritten", "Grenzwert nicht überschritten") an die zentrale Überwachungseinheit UW weiterleiten. Stellt die zentrale Überwachungseinheit fest, dass eine Rückmeldung von zumindest einem Überwachungselemente UE1, UE2, UE3 auf "Grenzwert überschritten" lautet, so kann von der zentralen Überwachungseinheit UW im dritten Verfahrensschritt 3 eine Meldung an die übergeordnete Ebene gesendet werden

## Patentansprüche

1. Verfahren zur prädiktiven Wartung eines elektronischen Bauelements (BE), welches als integrierte Schaltung, insbesondere als anwendungsspezifische, integrierte Schaltung oder als so genanntes Field Programmable Gate Array, ausgeführt ist, und wobei das elektronische Bauelement (BE) an zumindest einer Position (P1, P2) Sensoren (T1, U1, LZ1, T2, U2, LZ2) aufweist, von welchen während eines Betriebs aktuelle Werte von Systemparametern sowie einer Signallaufzeit an der zumindest einen Position (P1, P2) ermittelt werden, ***dadurch gekennzeichnet, dass*** von einer im elektronischen Bauelement (BE) angebrachten, zentralen Überwachungseinheit (UW) die aktuell von den Sensoren (T1, U1, LZ1, T2, U2, LZ2) an der zumindest einen Position (P1, P2) ermittelten Werte der Systemparameter und der Signallaufzeit abgefragt werden (1), wobei als Systemparameter Temperatur und Spannung an der zumindest einen Position (P1, P2) des elektronischen Bauelements (BE) ermittelt werden, dass anhand der aktuell ermittelten Werte der Systemparameter ein jeweils gültiger Grenzwert für die Signallaufzeit an der zumindest einen Position (P1, P2) ermittelt wird (2), und dass bei Überschreiten des jeweils gültigen Grenzwerts durch den aktuell ermittelten Wert der Signallaufzeit an der zumindest einen Position (P1, P2) eine Meldung an eine übergeordnete Ebene (GS) gesendet wird (3).

2. Verfahren nach Anspruch 1, ***dadurch gekennzeichnet, dass*** die im elektronischen Bauelement (BE) an der zumindest einen Position (P1, P2, P3) angebrachten Sensoren (T1, U1, LZ1, T2, U2, LZ2, T3, U3, LZ3) in zumindest einem Überwachungselement (UE1, UE2, UE3) zusammengefasst werden.

3. Verfahren nach einem der Ansprüche 1 bis 2, ***dadurch gekennzeichnet, dass*** eine Ermittlung des jeweils gültigen Grenzwerts für die Signallaufzeit an der zumindest einen Position (P1, P2) derart durchgeführt wird, dass vom jeweils ermittelten, gültigen Grenzwert ein kritischer Wert für die Signallaufzeit an der zumindest einen Position (P1, P2) unterschritten wird (2).

4. Verfahren nach einem der Ansprüche 1 bis 3, ***dadurch gekennzeichnet, dass*** während des Betriebs die aktuell von den Sensoren (T1, U1, LZ1, T2, U2, LZ2) an der zumindest einen Position (P1, P2) ermittelten Werte der Systemparameter und der Signallaufzeit von der zentralen Überwachungseinheit (UW) laufend oder während vorgegebener, periodischer Selbsttestphasen abgefragt werden (1).

5. Verfahren nach einem der Ansprüche 1 bis 4, ***dadurch gekennzeichnet, dass*** für die Ermittlung der Systemparameter und der Signallaufzeit an der zumindest einen Position (P1, P2) Sensoren (T1, U1, LZ1, T2, U2, LZ2) genutzt werden, welche für eine Verlustleistungsminimierung eingesetzt werden (1).

6. System zur Durchführung eines Verfahren zur prädiktiven Wartung eines elektronischen Bauelements (BE) nach einem der Ansprüche 1 bis 5, wobei das elektronische Bauelement (BE) als integrierte Schaltung, insbesondere ASIC oder FPGA ausgeführt ist, zumindest umfassend:
- Sensoren (T1, U1, LZ1, T2, U2, LZ2) zum Ermitteln aktueller Werte von Systemparametern und einer Signallaufzeit an zumindest einer Position (P1, P2) des elektronischen Bauelements (BE), ***dadurch gekennzeichnet, dass*** das System eine zentrale Überwachungseinheit (UW) umfasst, welche dazu eingerichtet ist, die aktuell von den Sensoren (T1, U1, LZ1, T2, U2, LZ2) an der zumindest einen Position (P1, P2) des elektronischen Bauelements (BE) ermittelten Werte der Systemparameter und der Signallaufzeit abzufragen, wobei als Systemparameter Temperatur und Spannung an der zumindest einen Position (P1, P2) des elektronischen Bauelements (BE) ermittelt werden, anhand der aktuell ermittelten Werte der Systemparameter einen jeweils gültigen Grenzwert für die Signallaufzeit an der zumindest einen Position (P1, P2) zu ermitteln und den jeweils gültigen Grenzwert mit dem aktuell ermittelten Wert der Signallaufzeit an der zumindest einen Position (P1, P2) zu vergleichen.

7. System nach Anspruch 6, ***dadurch gekennzeichnet, dass*** die zentrale Überwachungseinheit (UW) weiterhin dazu eingerichtet ist, bei Überschreiten des jeweils gültigen Grenzwerts durch den aktuell ermittelte Wert der Signallaufzeit an der zumindest einen Position (P1, P2) Meldungen an eine übergeordnete Ebene (GS) zu senden.

8. System nach einem der Ansprüche 6 bis 7, ***dadurch gekennzeichnet, dass*** weiterhin zumindest ein Überwachungselement (UE1, UE2, UE3) vorgesehen ist, in welchem die im elektronischen Bauelement (BE) an der zumindest einen Position (P1, P2, P3) angebrachten Sensoren (T1, U1, LZ1, T2, U2, LZ2, T3, U3, LZ3) zusammengefasst sind.

9. System nach einem der Ansprüche 6 bis 8, ***dadurch gekennzeichnet, dass*** als Sensoren (T1, U1, LZ1, T2, U2, LZ2) zum Ermitteln aktueller Werte von Systemparametern an der zumindest einen Position (P1, P2) des elektronischen Bauelements (BE) zumindest ein Sensor (T1, T2) zum Bestimmen aktueller Temperaturwerte und ein Sensor (U1, U2) zum Bestimmen aktueller Spannungswerte eingesetzt sind.

10. System nach einem der Ansprüche 6 bis 9, ***dadurch gekennzeichnet, dass*** die zentrale Überwachungseinheit (UW) als eigenständige Einheit ausgeführt ist.

11. System nach einem der Ansprüche 6 bis 9, ***dadurch gekennzeichnet, dass*** die zentrale Überwachungseinheit (UW) in eine Systemeinheit integriert ist.

## Claims

1. Method for the predictive maintenance of an electronic device (BE) which is implemented as an integrated circuit, in particular as an application-specific integrated circuit or as a so-called field programmable gate array, and wherein the electronic device (BE) has, at at least one position (P1, P2), sensors (T1, U1, LZ1, T2, U2, LZ2) by which current values of system parameters and of a signal propagation time at the at least one position (P1, P2) are determined during operation, **characterised in that** the system parameter values and signal propagation time values currently detected by the sensors (T1, U1, LZ1, T2, U2, LZ2) at the at least one position (P1, P2) are interrogated (1) by a central monitoring unit (UW) mounted in the electronic device (BE), wherein temperature and voltage at the at least one position (P1, P2) of the electronic device (BE) are determined as system parameters, that an applicable limit value for the signal propagation time at the at least one position (P1, P2) is determined (2) on the basis of the currently determined system parameter values, and that, if the applicable limit value is exceeded by the currently detected value of the signal propagation time at the at least one position (P1, P2), an indication is sent (3) to a superordinate level (GS).

2. Method according to claim 1, **characterised in that** the sensors (T1, U1, LZ1, T2, U2, LZ2, T3, U3, LZ3) mounted in the electronic device (BE) at the at least one position (P1, P2, P3) are combined in at least one monitoring element (UE1, UE2, UE3).

3. Method according to one of claims 1 to 2, **characterised in that** determination of the applicable limit value for the signal propagation time at the at least one position (P1, P2) is carried out such that the applicable limit value is below (2) a critical value for the signal propagation time at the at least one position (P1, P2).

4. Method according to one of claims 1 to 3, **characterised in that** during operation the system parameter values and signal propagation time values currently determined by the sensors (T1, U1, LZ1, T2, U2, LZ2) at the at least one position (P1, P2) are interrogated (1) by the central monitoring unit (UW) continuously or during predefined periodic self-test phases.

5. Method according to one of claims 1 to 4, **characterised in that** for determining the system parameters and the signal propagation time at the at least one position (P1, P2), sensors (T1, U1, LZ1, T2, U2, LZ2) are employed (1) which are used to minimise power dissipation.

6. System for carrying out a method for the predictive maintenance of an electronic device (BE) according to one of claims 1 to 5, wherein the electronic device (BE) is implemented as an integrated circuit, in particular an ASIC or FPGA, at least comprising:
- sensors (T1, U1, LZ1, T2, U2, LZ2) for determining current values of system parameters and a signal propagation time at least one position (P1, P2) of the electronic device (BE), **characterised in that** the system incorporates a central monitoring unit (UW) which is designed to interrogate the system parameter values and signal propagation time values currently determined by the sensors (T1, U1, LZ1, T2, U2, LZ2) at the at least one position (P1, P2) of the electronic device (BE), wherein temperature and voltage at the at least one position (P1, P2) of the electronic device (BE) are determined as system parameters, to determine an applicable limit value for the signal propagation time at the at least one position (P1, P2) on the basis of the currently determined system parameter values, and to compare the applicable limit value with the currently determined value of the signal propagation time at the at least one position (P1, P2).

7. System according to claim 6, **characterised in that** the central monitoring unit (UW) is also designed to send indications to a superordinate level (GS) if the applicable limit value is exceeded by the currently determined value of the signal propagation time at the at least one position (P1, P2) .

8. System according to one of claims 6 to 7, **characterised in that,** in addition, at least one monitoring element (UE1, UE2, UE3) is provided in which the sensors (T1, U1, LZ1, T2, U2, LZ2, T3, U3, LZ3) mounted in the electronic device (BE) at the at least one position (P1, P2, P3) are combined.

9. System according to one of claims 6 to 8, **characterised in that** at least one sensor (T1, T2) for determining current temperature values and one sensor (U1, U2) for determining current voltage values are used as sensors (T1, U1, LZ1, T2, U2, LZ2) for determining current values of system parameters at the at least one position (P1, P2) of the electronic device (BE).

10. System according to one of claims 6 to 9, **characterised in that** the central monitoring unit (UW) is implemented as a discrete unit.

11. System according to one of claims 6 to 9, **characterised in that** the central monitoring unit (UW) is incorporated in a system unit.

## Revendications

1. Procédé de maintenance prédictive d'un composant électronique (BE) qui est réalisé en tant que circuit intégré, et plus particulièrement en tant que circuit intégré spécifique à une application ou en tant que ce qu'il est convenu d'appeler un Field Programmable Gate Array, et le composant électronique (BE) présentant, en au moins une position (P1, P2), des capteurs (T1, U1, LZ1, T2, U2, LZ2) qui, pendant un fonctionnement, déterminent des valeurs actuelles de paramètres système ainsi qu'un temps de propagation de signal en l'au moins une position (P1, P2), **caractérisé en ce qu'**une unité de surveillance centrale (UW) montée dans le composant électronique (BE) demande (1) les valeurs des paramètres système et du temps de propagation de signal actuellement déterminées par les capteurs (T1, U1, LZ1, T2, U2, LZ2) en l'au moins une position (P1, P2), en tant que paramètres système étant déterminées la température et la tension en l'au moins une position (P1, P2) du composant électronique (BE), **en ce qu'**est déterminée (2), à l'aide des valeurs actuellement déterminées des paramètres système, une valeur limite respectivement valable pour le temps de propagation de signal en l'au moins une position (P1, P2) et **en ce que**, en cas de dépassement de la valeur limite respectivement valable par la valeur actuellement déterminée du temps de propagation de signal en l'au moins une position (P1, P2), un message est envoyé (3) à un niveau supérieur (GS).

2. Procédé selon la revendication 1, **caractérisé en ce que** les capteurs (T1, U1, LZ1, T2, U2, LZ2, T3, U3, LZ3) montés dans le composant électronique (BE) en l'au moins une position (P1, P2, P3) sont regroupés en au moins un élément de surveillance (UE1, UE2, UE3).

3. Procédé selon l'une des revendications 1 à 2, **caractérisé en ce qu'**une détermination de la valeur limite respectivement valable pour le temps de propagation de signal en l'au moins une position (P1, P2) est effectuée de telle sorte que la valeur limite respectivement déterminée et valable est inférieure (2) à une valeur critique pour le temps de propagation de signal en l'au moins une position (P1, P2).

4. Procédé selon l'une des revendications 1 à 3, **caractérisé en ce que**, pendant le fonctionnement, les valeurs des paramètres système et du temps de propagation de signal actuellement déterminées par les capteurs (T1, U1, LZ1, T2, U2, LZ2) en l'au moins une position (P1, P2) sont demandées (1) par l'unité de surveillance centrale (UW) continuellement ou pendant des phases d'autotest périodiques données.

5. Procédé selon l'une des revendications 1 à 4, **caractérisé en ce que** sont utilisés, pour la détermination des paramètres système et du temps de propagation de signal en l'au moins une position (P1, P2), des capteurs (T1, U1, LZ1, T2, U2, LZ2) qui sont utilisés (1) pour une minimisation de la dissipation de puissance.

6. Système pour exécuter un procédé de maintenance prédictive d'un composant électronique (BE) selon l'une des revendications 1 à 5, le composant électronique (BE) étant réalisé en tant que circuit intégré, et plus particulièrement en tant qu'ASIC ou FPGA, comprenant au moins :
- des capteurs (T1, U1, LZ1, T2, U2, LZ2) pour déterminer des valeurs actuelles de paramètres système et d'un temps de propagation de signal en au moins une position (P1, P2) du composant électronique (BE), **caractérisé en ce que** le système comprend une unité de surveillance centrale (UW) qui est configurée pour demander les valeurs des paramètres système et du temps de propagation de signal actuellement déterminées par les capteurs (T1, U1, LZ1, T2, U2, LZ2) en l'au moins une position (P1, P2) du composant électronique (BE), en tant que paramètres système étant déterminées la température et la tension en l'au moins une position (P1, P2) du composant électronique (BE), pour déterminer, à l'aide des valeurs actuellement déterminées des paramètres système, une valeur limite respectivement valable pour le temps de propagation de signal en l'au moins une position (P1, P2) et pour comparer la valeur limite respectivement valable avec la valeur actuellement déterminée du temps de propagation de signal en l'au moins une position (P1, P2).

7. Système selon la revendication 6, **caractérisé en ce que** l'unité de surveillance centrale (UW) est en outre configurée pour envoyer des messages à un niveau supérieur (GS) en cas de dépassement de la valeur limite respectivement valable par la valeur actuellement déterminée du temps de propagation de signal en l'au moins une position (P1, P2).

8. Système selon l'une des revendications 6 à 7, **caractérisé en ce qu'**est en outre prévu au moins un élément de surveillance (UE1, UE2, UE3) dans lequel sont regroupés les capteurs (T1, U1, LZ1, T2, U2, LZ2, T3, U3, LZ3) montés dans le composant électronique (BE) à l'au moins une position (P1, P2, P3).

9. Système selon l'une des revendications 6 à 8, **caractérisé en ce que** sont utilisés, en tant que capteurs (T1, U1, LZ1, T2, U2, LZ2) pour déterminer des valeurs actuelles de paramètres système en l'au moins une position (P1, P2) du composant électronique (BE), au moins un capteur (T1, T2) pour déterminer des valeurs de température actuelles et un capteur (U1, U2) pour déterminer des valeurs de tension actuelles.

10. Système selon l'une des revendications 6 à 9, **caractérisé en ce que** l'unité de surveillance centrale (UW) est réalisée en tant qu'unité indépendante.

11. Système selon l'une des revendications 6 à 9, **caractérisé en ce que** l'unité de surveillance centrale (UW) est intégrée dans une unité du système.
